# EUROPEAN PATENT SPECIFICATION

(11) **EP 1 219 514 B1**
(45) Date of publication and mention of the grant of the patent: **05.03.2008**
(21) Application number: 00311767.8
(22) Date of filing: 29.12.2000
(51) Int. Cl.: B60T 7/10

(54) **A steering and braking control system for a vehicle**
Steuerungs-und Bremskontrollsystem für Fahrzeuge
Système de commande de direction et de freinage d'un véhicule

(43) Date of publication of application: 03.07.2002
(60) Divisional application: 07113867.1
(73) Proprietor: Sebazco, Roy, Launderhill, FL 33319 (US)
(72) Inventor: Sebazco, Roy, Launderhill, FL 33319 (US)
(74) Representative: Finnie, Peter John

(56) References cited:
- EP-A- 0 069 090
- EP-A- 0 970 839
- FR-A- 513 292
- US-A- 2 824 462
- US-A- 4 078 628
- US-A- 4 143 734
- US-A- 5 666 857

## Description

The present invention relates to a steering and braking control system for a vehicle. More particularly, the present invention relates to a system utilizing the steering wheel to accomplish both the steering and braking operations of the vehicle. Specifically, the present invention relates to a system wherein the steering is accomplished in a normal manner by the operator, but the driver need only push forward on the steering wheel to accomplish the braking operations.

### BACKGROUND OF THE INVENTION

Recently, Federal and State governments have made major strides to allow disabled individuals, such as paraplegics, to pursue occupations of their choice. A paraplegic may suffer paralysis of the lower half of his/her body involved with the movement of both legs which prevents his/her driving of a typical automobile and, thus, hindering his/her entrance into the work force. Although the paraplegic may be lacking in strength of his/her lower half of the body, more than likely, the paraplegic develops superior upper body strength, to more than compensate for their disability. It is desired that automobiles be provided having operator control systems that make use of the paraplegic's upper body strength and do not require the use of his/her legs.

Automobiles that employ control systems that do not require the use of the operator's leg to control the automobile, such as to perform braking operations, are known and some of which are described in U.S. Patents 656,962 ('962); 2,471,244 ('244) US 5 666 857, US 2 824 462, and 3,117,649 ('649), all of which are herein incorporated by reference. The '962 patent discloses a system having a single device that is used to control the steering, acceleration, and braking of the vehicle, but this device is a bar handle which has limitations, especially, in the steering aspects of the automobile by present-day drivers who are use to the handling provided by a steering wheel. The '244 patent uses a primary steering wheel to accomplish the steering of an automobile and which coacts with an auxiliary steering wheel to assist in the braking operations of the automobile, but the operator's usage of two devices to control one automobile may disadvantageously cause the operator to lose the "feel" of the operating characteristics of the automobile. The '649 patent discloses an automobile that has a single handle to control the principal operations of an automobile which are the steering, acceleration and braking. However, the usage of a single handle to control an automobile has limitations, especially as mentioned for the '962 patent, to one who is accustomed to steering an automobile by the use of a steering wheel. It is desired that a control system by provided for an automobile that does not require the use of the legs of the operator to accommodate the braking operation but does not suffer from prior art limitations.

In addition to the desires of the handicapped individuals, a non-handicapped person may also desire a control system that does not require the use of his/her legs, especially, if it allows for a system that more readily controls the automobile. This enhanced control system provides continuous control by the driver with his/her hand always on the steering wheel. Such control allows this system to be used for racing cars as well as in less vigorous recreation endeavors, such as in the use of golf carts and conventional automobiles. It is desired that a control system for all types of motorized vehicles be provided that enhances the handling of the vehicles which does not require the use of the legs of the operator.

The control system disclosed allows a paraplegic having paralysis of the lower half of the body to operate a motorized vehicle safely and securely, even in racing cars in competitive races.

The control system disclosed does not require the use of legs of the operator but does include a steering wheel operating the control system, which may be adapted to various vehicles, including motorized devices such as racing cars, automobiles, wheelchairs, or golf carts.

These and other objects of the present invention as well as advantages thereof over existing prior art forms will be apparent in view of the following detailed description of the invention and the accompanying claims.

### SUMMARY OF THE INVENTION

The present invention is directed to a system for operating an automobile that does not require the use of the legs of the operator, yet provides a system that is readily accepted by all users and leads to enhanced operator handling capability. The present invention is a continuation in part of the parent application Serial No. 08/544,676 now Patent No. 5,666,857, incorporated by reference herein.

According to the present invention there is provided a steering and braking control system for a vehicle with a steering column having a longitudinally extending axis defined by a steering shaft, said vehicle having a braking mechanism and a vacuum assist, said control system comprising:
(a) a steering member having first and second arms, with said first arm having first and second ends and said second arm having first and second ends; and
(b) a master brake cylinder nested within said steering shaft.

The arrangement of the control system allows the operator to steer the vehicle with the steering wheel and the operator needs only exert a force on the steering wheel to cause the brake pedal to be forced downward and arrest the motion of the vehicle in a controlled manner without the necessity of the driver's hands leaving the steering wheel.

### BRIEF DESCRIPTION OF THE DRAWINGS

Fig. 1 is a schematic illustration in which the steering wheel of the steering and control system of a comparative example is turned 90 degrees, relative to its at-rest position, primarily to illustrate, in the same view, all of the movements of the linkages.
Fig. 2 is a view, taken along the line 2-2 of Fig. 1, illustrating details of the pivotal mechanism.
Fig. 3 is a view, taken along the line 3-3 of Fig. 1, illustrating the relationship between the sleeve and the steering column and steering shaft both of a vehicle.
Fig. 4 is an alternate construction of Fig. 3 in which the two relatively small bearings of Fig. 3 are replaced by a relatively large one.
Fig. 5 is an optional solution, using an electromagnet, to allow one to automatically engage or disengage the use of the steering wheel to control the braking of the vehicle.
Fig. 6 is a view, taken along line 6-6 of Fig. 1, illustrating the interconnections between the guiding mechanism and the force translating mechanism.
Fig. 7 is a view, taken along line 7-7 of Fig. 1, illustrating some of the interconnections of the force translating mechanism.
Fig. 8 is similar to Fig. 1 and illustrates the overall operation.
Fig. 9 is similar to Fig. 2 and illustrates an alternate construction of a pivotal mechanism.
Fig. 10 is a view, taken along line 10-10 of Fig. 9, illustrating the interconnection between the steering column and steering wheel of the alternate construction of Fig. 9.
Fig. 11 is a schematic illustration of an embodiment of the steering and braking control system of the present invention turned 90 degrees, relative to its at-rest position.
Fig. 12 is a view, taken along the line 17-17 of Fig. 11.

### DETAILED DESCRIPTION OF THE PREFERRED EMBODIMENTS

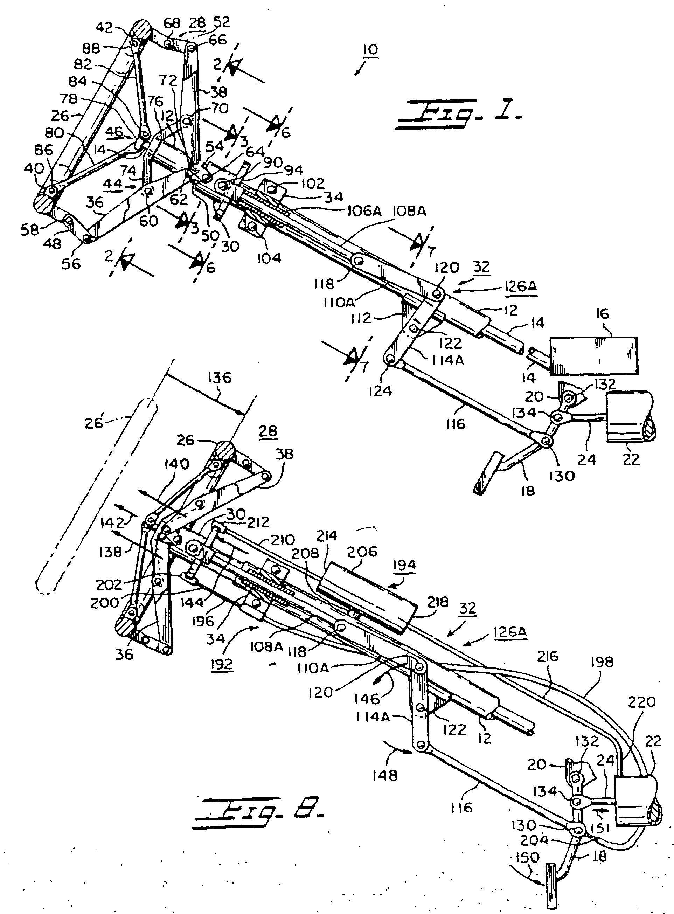

Referring to the drawings, wherein the same reference numbers illustrate the same elements throughout, there is shown in Fig. 1 a schematic illustration of the steering and braking control system 10 of a comparative example which does not form a part of the claimed invention. The steering and control system 10 is coupled to the steering column 12 of a vehicle having an uppermost portion and confining a steering shaft 14 that is connected to the steering mechanism 16 of the vehicle. As seen in Fig. 1, the steering column 12 has a longitudinally extending axis. The vehicle also has a brake pedal 18, typically coupled to the interior 20 of the vehicle and connected to the brake mechanism 22, commonly by way of a push rod 24 to the braking mechanism, normally being a master brake cylinder.

The operational functions of the steering and braking control system 10 is solely performed by an operator's use of a steering wheel 26, more particularly, without the use of the operator's feet to provide for the braking operation. The steering wheel 26 is shown in Fig. 1 as being turned 90 degrees, from its at-rest position, primarily to illustrate (in the same view) all the movements of the linkage of the steering and braking control system 10. Fig. 1 also illustrates that the rotation of the steering wheel 26, as will be further described, does not affect the brake system of the vehicle in which the steering and braking control system 10 is used. The steering and braking control system 10 comprises the steering wheel 26, a pivotal mechanism 28, a sleeve 30, a force translating mechanism 32, which actuates the braking mechanism 22, and preferably, a guiding device 34.

The operator uses the steering wheel 26 to perform the steering functions in a normal manner, and when it is desired to brake the vehicle, the operator need only exert a force on the same steering wheel 26, which is pivotally connected to coact with the sleeve 30, the pivotal mechanism 28 and the force translating mechanism 32, to act in a manner similar as a cork screw device or a pumping piston, so as to draw upward or pushes downward the sleeve 30 which, in turn respectively, draws upwardly or pushes downwardly the force translating mechanism 32 which, in turn, and conversely, causes the brake pedal 18 to be pressed downward, thereby, arresting the motion of the vehicle by means of the vehicle's braking mechanism 22. The greater the pressure on the steering wheel, the greater the force applied to the brake.

The pivotal means 28 of Fig. 1 comprises first and second arms 36 and 38, first and second securing means 40 and 42 locked to or embedded in the steering wheel 26, a yoke 44, and a fastening means 46. The arm 36 has pivotal links 48 and 50 attached to opposite ends and, similarly, the arm 38 has pivotal links 52 and 54 attached to opposite ends. The pivotal link 48 is attached to the arm 36 by a retaining pin 56 and to an extension of the first securing means 40 by a retaining pin 58. The central region of the arm 36 is attached to the yoke 44 by a retaining pin 60 and one end of the arm 36 is attached to the pivotal link 50 by a retaining pin 62. As seen in Fig. 1, the location of retaining pin 60 correspondingly defines the central region of arm 36 which is interposed between the first and second ends of the arm 36. Similarly, as further seen in Fig. 1, the location of retaining pin 70 defines the central region of arm 38 which is interposed between the first and second ends of the arm 38. Furthermore, the terminology "central region," "central portion," or "intermediate portion," is used herein in an interchangeable manner and all such usages are meant to correspond to the intermediate location between the first and second ends of a structural element, such as arm 36 or 38. A retaining pin 64 also attaches the arm 36 to the sleeve 30, as well as attaching one end of the arm 38 to the sleeve 30. The other end of the arm 38 is attached to the pivotal link 52 by a retaining pin 66 and the other end of the pivotal link 52 is attached to an extension of the second securing means 42 by means of a retaining pin 68. The central region of the arm 38 is attached to the yoke 44 by a retaining pin 70 and one end of the arm 38 is attached to the pivotal link 54 by retaining pin 72.

The yoke 44 has first and second shoulders 74 and 76 respectively connected to the first and second arms 36 and 38 via the retaining pins 60 and 70. The yoke 44 has a collar placed on top of the uppermost portion of the steering column 12.

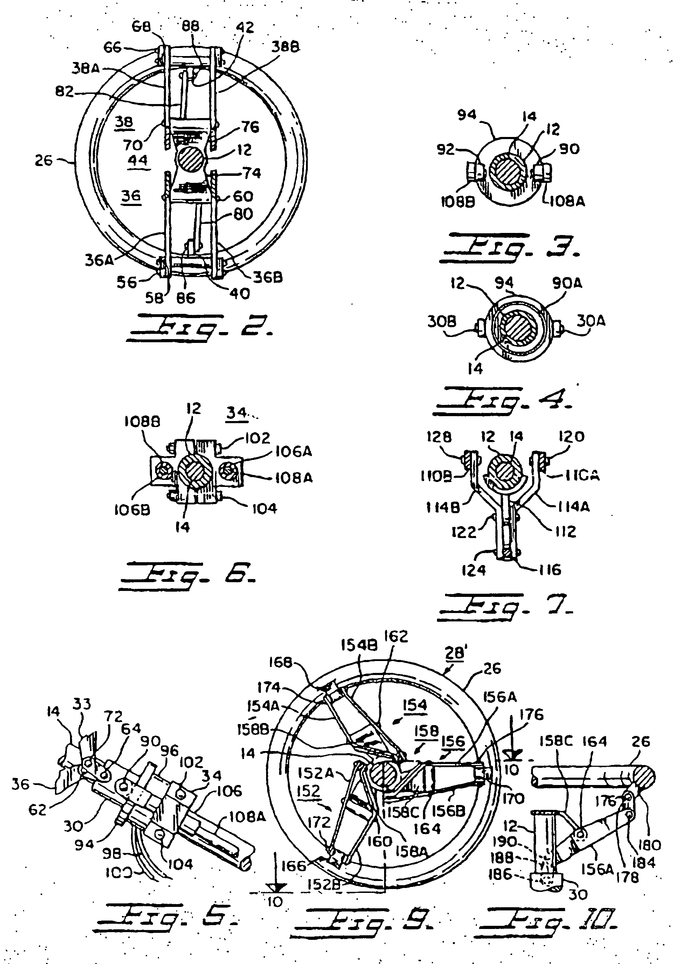

The fastening means 46 has jaws 78 (not fully shown) connected to the steering shaft 14 that extends out of the yoke 44. The jaws 78 have provisions for receiving a retaining pin and may take the form, similar to that used in an automobile, of a nut that is threadably engaged to the steering shaft 14. The fastening means 46 further comprises first and second control bars 80 and 82 both of which have rod ends that pivot and one such end has provisions to accept a retaining pin 84 so as to pivotally fasten to the jaws 78. The other end of the control bars 80 and 82 also have rod ends that pivot and which are pivotally connected to extensions of the first and second securing means 40 and 42 by means of retaining pins 86 and 88 respectively. As will be described, although the jaws 78 engage and rotate the steering shaft 14, bearing means located proximate the sleeve 30 allow the sleeve 30 to rotate with the steering wheel 28, while the force translating means 32 maintains its axial orientation ready to be forced downward onto the arm of the brake pedal 18. The interconnections of the pivotal mechanism 28 may be further described with reference to Fig. 2 which is a cross-sectional view, taken along line 2-2, of Fig. 1.

As seen in Fig. 2, the arms 36 and 38, in actuality, each comprises two separate parallel plates 36A and 36B and 38A and 38B respectively. Further, as seen in Fig. 2, the shoulders 74 and 76 of yoke 44 are actually merged together and are separated from each other to provide the previously mentioned collar of yoke 44 and also a central bore therebetween that allows for the passage of the steering shaft 14 and exit thereof so as to be connected to the jaws 78 previously described with reference to Fig. 1.

As seen in Fig. 1, the sleeve 30 is connected to the lower end of the arms 36 and 38 by means of pin 64. The sleeve 30 also surrounds the steering column 12 which may be further described with reference to Fig. 3 which is a view, taken along line 3-3, of Fig. 1.

Fig. 3 illustrates two relatively small bearings 90 and 92 each having protrusions (not shown) by which the linking rods 108A and 108B (not shown) are hooked onto the sleeve 30 having a rim 94 (also see Fig. 1). The bearings 90 and 92 allowing the rim 94 and, thus, sleeve 30 to roll under them, in cooperation with the linking rods 108A and 108B, serving as cables, provide a motion transfer means in which the bearings 90 and 92 of Fig. 3 allow the axial linking rods 108A and 109B to maintain their axial orientation when the steering wheel 26 and, thus, the sleeve 30 are turned.

An alternate example of the motion transfer means that allows for linking rods 108A and 108B to maintain their axial orientation in spite of any movement of the steering wheel 28 is shown in Fig. 4, in which the two relatively small bearings 90 and 92 are replaced by a relatively large bearing 90A. The linking rods 108A and 108B hook onto protrusions 30A and 30B, respectively, and the bearing 90A operates in a similar manner as described for bearing 90 and 92.

The motion transfer means provided by either of the examples of Figs. 3 and 4 allows the steering wheel 26, attached to arms 36 and 38 and to control arms 80 and 82, to be turned while the linking rods 108A and 108B maintain their axial orientation and are ready to receive a downward force so as to cause the brake pedal 18 to be pressed downward in a manner as to be described hereinafter with reference to Fig. 8. Either of these motion transfer means may be arranged so that the linking rods 108A and 108B may be automatically disengaged from the sleeve in response to an electrical signal and such disengagement may be described with reference to Fig. 5.

Fig. 5 is an optional solution to disengage or to secure the linking rods 108A and 108B to the sleeve 30 and, thus, to the steering wheel 26. The disengagement/engagement is provided by means of an electromagnet solenoid 96. More particularly, when an able-body human being no longer desires the benefits of the steering and braking control system 10 he/she need only activate a switch (not shown) to supply an electrical signal, via signal paths 98 and 100, to the electromagnet solenoid 96 disengaging the solenoid 96 from the sleeve 30 and, thus, from the steering wheel 26.

As seen in Fig. 5, the guide means 34, having fasteners 102 and 104, is located below the sleeve 30 having a hat-like structure with a crown and brim 94. As seen more clearly in Fig. 1, the brim 94 is an annular flange having an opening dimensioned so as to form the bore of the sleeve 30. The guide means 34, as best seen in Fig. 1, fits over tubes 106A (also shown in Fig. 1 in cross-section) and 106B (not shown). The guide means 34 in actuality is located on opposite sides of the steering column 12 and may be further described with reference to Fig. 6 which is a view, taken along line 6-6, of Fig. 1.

As seen in Fig. 6, the guide means 34 has openings arranged from each other on opposite sides of the steering column 12 that respectively retain tubes 106A and 106B which, in turn, respectively allow for the passage therein of first and second linking rods 108A and 108B which are both part of the force translating mechanism 32 that may be further described with reference back to Fig. 1. Fig. 1 illustrates one side of the force translating mechanism 32 having elements identified with the reference letter A, but the force translating mechanism 32 also has respectively similar elements on the non-illustrated side identified herein with the reference letter B.

The force translating mechanism 32 further comprises first and second axial linking members 110A and 110B, a bracket 112, first and second offset linking members 114A and 114B and a connecting rod 116. The elements 108B and 110B, are not illustrated in Fig. 1 but are connected in the same manner as their counterparts 108A and 110A. The first linking rod 108A is connected to the first axial linking member 110A by means of a retaining pin 118. The first axial linking member 110A is connected to the first offset linking member 114A by means of retaining pin 120. The first offset linking member 114A is connected to the bracket 112 by a retaining pin 122 and to the connecting rod 116 by a retaining pin 124, each pin 122 and 124 to be further described with reference to Fig. 7. The retaining pins 122 and 124, as well as other retaining pins of the force translating mechanism 32, serve as means for allowing pivoting between interconnected members of the force translating mechanism 32. The first offset linking member 114A is joined to the first linking member 110A in a non-axial manner, that is, in a substantially perpendicular manner as viewed in Fig. 1. More particularly, the connection between the first axial linking member 110A and the offset linking member 114A are brought together in such a manner as to establish a knee region 126A, sometimes referred to as a bell crank, to be further described with reference to Fig. 8. Further connections of the offset linking member 114A, as well as the second offset linking member 114B may be further described with reference to Fig. 7 which is a view, taken along line 7-7, of Fig. 1.

As seen in Fig. 7, the first offset linking member 114A, as well as the second offset linking member 114B, have arms that extend outward so that the distance therebetween is greater than the diameter of the steering column 12. The first and second offset linking members 114A and 114B are connected to an extension of bracket 112 by the retaining pin 122 and to the connecting rod 116 by retaining pin 124. The offset linking member 114B is connected to the second axial linking member 110B by a retaining pin 128. Further connections of the connecting rod 116 may be further described with reference back to Fig. 1.

The connecting rod 116 is connected to the brake pedal 18 by means of retaining pin 130. The brake pedal 18, in turn, is connected to the interior 20 of the vehicle by a retaining pin 132 and to the push rod 24 by means of a retaining pin 134. The push rod 24 controls the booster brake cylinder 22 which, in turn, controls the braking operation of the vehicle employing the steering and braking system 10. The operation may be further described with reference to Fig. 8 which illustrates the movement of the pertinent linkages of the steering and braking control system 10 that push down onto the arm of the brake pedal 18.

In operation, the steering of the vehicle is accomplished in the normal manner by the operator using the steering wheel 26. However, if the operator desires to stop the vehicle, he/she need only apply a downward force, in a forward direction relative to the operator, on the steering wheel 26. The use of the steering wheel 26 combined with the pivotal elements of the steering and braking system 10 provide maximum force to the brake pedal 18 with minimum of effort on the part of the operator. The downward force applied by the operator causes the steering wheel 26 to move from its original position, indicated by the phantom representation identified by reference number 26', to its downward position indicated by the solid representation identified by reference number 26. The downward movement of the steering wheel 26 is shown by the directional arrow 136. The downward force exerted on the steering wheel 26 causes the pivotal links 48 and 52 of arms 36 and 38, respectively, to buckle outward and acquire a relatively straight orientation. Further downward force exerted on the steering wheel 26 is now transferred to the arms 36 and 38 and creates upwardly directed forces indicated by directional arrows 138 and 140, respectively, which are combined, because of the structure of the pivot mechanism 28, into an upward force indicated by arrow 142. The upward force indicated by arrow 142 in turn causes the central portion of the pivot mechanism 28 to raise the sleeve 30 in the upward direction indicated by arrow 144. The upward movement of sleeve 30 causes the force translating mechanism 32 to tend to straighten its first and second linking members 110A and 110B which, in turn, causes the joint 120 between axial linking members 110A and 110B and offset linking members 114A and 114B to move inward as indicated by directional arrow 146 carrying with it the axial offset linking members 114A and 114B. As the joint 120 is forced to move inward, it causes the axial offset linking members 114A and 114B, which are pivoted about the pin 122, to be moved downward in a pivotal manner away from the axial linking members 110A and 110B and in a counterclockwise direction indicated by arrow 148. As further seen in Fig. 8, the axial linking members 110A and 110B transversely move along side of the steering column 12 in response to the axial force exerted on the steering wheel 26. The counterclockwise movement of the offset linking members 114A and 114B in turn, cause a downward movement of the connecting bar 116 which, in turn, exerts a force on the arm of the brake pedal 18 so that the face of the brake pedal 18 is moved downward as indicated by directional arrow 150 which, in turn, causes the push rod 24 to be moved inward as indicated by directional arrow 152 which, in turn, causes the braking mechanism 22 to arrest the motion of the vehicle housing the braking and control system 10.

It should now be appreciated that the steering and braking control system 10 not only serves as a steering control device but also, by simply exerting a force on the steering wheel, allows the operator of the vehicle to control the braking action of the vehicle.

A further example that coacts with the steering wheel 26 may be further described with reference to Fig. 9. Fig. 9 illustrates a pivotal mechanism 28' that operates in a similar manner as that of the previously described pivotal mechanism 28 but has a three arm arrangement instead of the two arm arrangement of the pivotal mechanism 28 illustrated in Fig. 2. The pivotal mechanism 28' comprises first, second and third arms 152, 154 and 156 each respectively comprised of pairs of plates 152A and 152B, 154A and 154B, 156A and 156B each pair having one of its plates (152B, 154B and 156B) contoured so that the plates of the pairs are merged together at one end as shown in Fig. 9. The central portion of the first, second and third arms 152, 154 and 156 are respectively connected to a yoke 158, more particularly, to first, second and third shoulders 158A, 158B and 158C by retaining pins 160, 162 and 164 respectively. In a manner similar to that as previously described for arms 36 and 38, the central portion of the first, second, and third arms is located between respective first and second ends. Further, the first, second and third arms 152, 154 and 156 are connected to the steering wheel 26 by means of securing means 166, 168 and 170 by means of retaining pins 172, 174 and 176. Securing means 166, 168 and 170 are essentially the same as securing means 40 and 42 that are locked on or embedded in the steering wheel 26. The connection of the steering wheel 26 to the arms 152, 154 and 156, in particular, to the plate 156A of arm 156 may be further described with reference to Fig. 10 which is a view taken along line 10-10 of Fig. 9.

As seen in Fig. 10, the plate 156A is connected to the steering wheel 26 by means of pivotal link 178 which is connected to a projection 180 of the securing means 170 by means of the retaining pin 176. The pivotal link 178 is connected to the plate 156A by retaining pin 184. Further, as seen in Fig. 10, the plate 156A is connected to sleeve 30 by means of retaining pin 186 and to a second link 188 of plate 156A by a retaining pin 190.

The steering wheel 26 connected to the three arms 152, 154 and 156 operates in a similar manner as previously described with reference to Fig. 8, except that a downward force on the steering wheel 26 is translated by three arms 152, 154 and 156 so as to draw the sleeve 30 upward which, in turn, straightens out the force translating mechanism 32 which, in turn, causes the connecting rod 116 to exert a downward force onto the brake pedal 18 which, in turn, arrests the motion of the vehicle employing the example of Figs. 9 and 10.

The steering and braking control system 10 has alternate force translating examples that employ cables and/or hydraulic pistons, each of which cooperates with the pivotal mechanisms of Figs. 1-10 and each of which may be further described with reference back to Fig. 8.

Fig. 8 illustrates two separate force translating examples 192 and 194, each of which is operatively coupled to the steering wheel 26 by means of the pivotal mechanism 28 (Figs. 1-8) or 28' (Figs. 9 and 10), more particularly, by means of sleeve 30 of the pivotal mechanism.

The force translating mechanism 192 comprises a cable 196 and an outer covering or sleeve 198 which is attached to the guide means 34. The cable 196 has a first end 200 connected to sleeve 30, by means of a connector 202, and a second end 204 connected (not shown) to the retaining pin 130 which, in turn, is connected to the brake pedal 18. The force translating mechanism 192 may be used in place of or cooperating with the force translating mechanism 32 as a safety feature. In operation, pushing down of the steering wheel 26, previously described, causes the cable 196 to be pulled up by way of the first end 200 and connector 202 which, in turn, causes the second end 204 to be pulled inward causing the brake pedal to be moved downward in direction 150, thereby, operating the braking mechanism 22.

The force translating mechanism 194 comprises a hydraulic piston 206 mounted to the steering column 12 by a leg 208. The hydraulic piston 206 has a control rod or arm 210 having a first end 212 attached to sleeve 30, and a second end 214 that movably enters and exits the hydraulic piston 206. The hydraulic piston 206 also has a control line 216 serving as a hydraulic line. The control line 216 has a first end 218 operatively coupled to the hydraulic piston 206 and a second end 220 operatively coupled to the braking mechanism 22. The hydraulic piston 206 is of a conventional type and may comprise a sliding piece, such as control rod 210, whose movement creates a fluid pressure that is applied to the braking mechanism 22, via the hydraulic line 216.

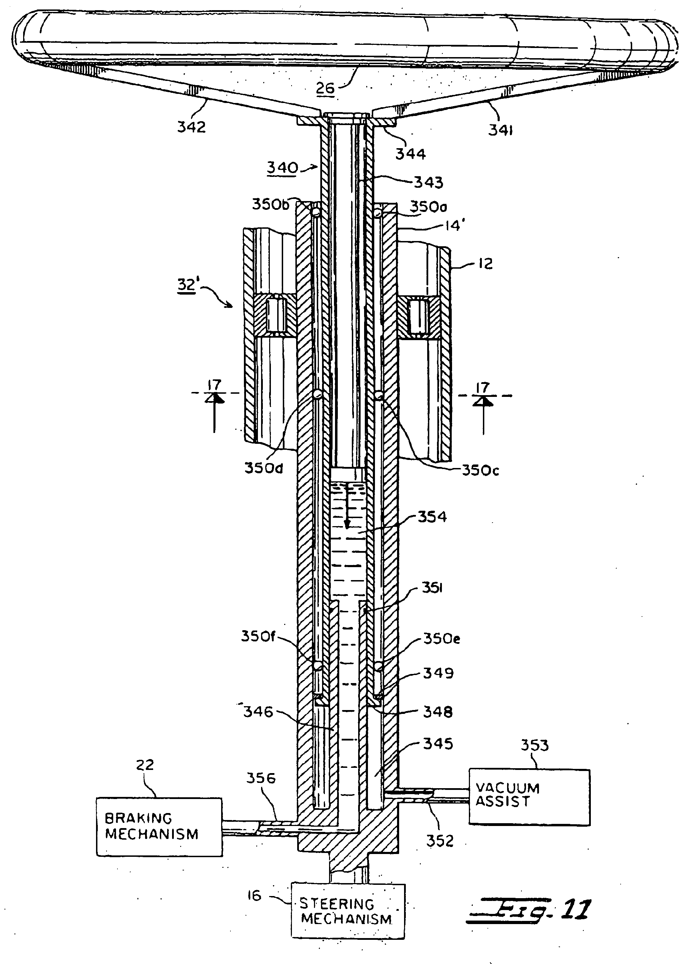

The force translating mechanism 194, shown in Fig. 8 as being located below the steering wheel 26, may be operated such that the pushing downward of steering wheel 26 causes the hydraulic piston 206 to exert a hydraulic pressure, via hydraulic line 216, that is applied to braking mechanism 22 which correspondingly causes a braking action to be applied to the vehicle. For such downward movement of steering wheel 26, the hydraulic piston 206 would need to be arranged so that upward movement of its control rod 216, following its attached-to-sleeve 30, exerts a hydraulic pressure operatively coupled to the braking mechanism 22. If desired, the force translating mechanism 194 may be arranged to be interconnected to the steering wheel 26 so that downward movement of the steering wheel 26 causes a corresponding downward movement of the control rod 216 which, in turn, is responded to by the hydraulic piston 206 exerting a hydraulic pressure, via hydraulic line 216, that is applied to the braking mechanism 22 which, in turn, correspondingly causes a braking action to be applied to the vehicle.
A further embodiment of the present invention may be further described with reference to Fig. 11. Fig 11 illustrates steering and braking control mechanism 10' that operates in a similar manner as the steering and braking control mechanism 10 previously described and disclosed in the parent application Ser. No. 08/544,676 now Patent No. 5,666,857, but utilizes a conventional steering wheel 26 and incorporates a master brake cylinder 340 within the steering shaft 14' instead of a force translating mechanism 32 with external mechanical parts interacting with the braking mechanism 22. Fig. 11 illustrates a conventional steering wheel 26 with first and second arms 341 and 342 and a master brake cylinder 340 comprises of a hydraulic piston 343 and cylinder wall 344. The master brake cylinder 340 of Fig. 11 is axially nested within the steering shaft 14'. Similarly, the hydraulic piston 343 is nested within cylinder wall 344.

The steering wheel 26 of Fig. 11 comprises of first and second arms 341 and 342. The first ends of first and second arms 341 and 342 are secured to the steering wheel 26. The second ends of first and second arms 341 and 342 are secured to the first end of the cylinder wall 344.

The steering shaft 14' of Fig. 11 has a hollow well-like structure, with cylinder wall 344 and hydraulic piston 343 nested within and extending beyond the first end of steering shaft 14'. Within the hollow well of the steering shaft 14' is an inner wall 346, having an external dimension the same as the internal dimension of cylinder wall 344. The second end of the hollow well between the internal hollow well of steering shaft 14' and the inner wall 346 is space 345, connected to vacuum assist 353 through control line 352. The second end of the hollow well within the inner wall 346 is space 354, connected to the braking mechanism 22 through hydraulic line 356. The second end of the steering shaft 14' is connected to the steering mechanism 16.

The cylinder wall 344 as shown in Fig. 11 has a hollow and hat-like structure having a brim 348 as second end. The first end of cylinder wall 344 is secured to the second ends of first and second arms 341 and 342 of steering wheel 26. The cylinder wall 344 is nested within the hollow structure of the steering shaft 14', separated by bearings 350a, 350b, 350c, 350d, 350e and 350f, which slide along axial groves 355 on the internal wall of steering shaft 14' and the external wall of cylinder wall 344. The brim 348 of cylinder wall 344 is nested within steering shaft 14', between the internal hollow wall of steering shaft 14' and external wall of inner wall 346. Where the brim of the cylinder wall 344 meets the internal wall of steering shaft 14' and the external wall of inner wall 346 are seals 348 and 351, respectively, which prevents any leakage of brake fluid from space 354. Rotational movement of the steering wheel 26 is translated to the first end of cylinder wall 344, which in turns translate to the steering shaft 14' through bearings 350a, 350b, 350c, 350d, 350e and 350f, which slide along axial groves 355.

The hydraulic piston 343 of Fig. 11 has first and second ends. The first end of hydraulic piston 343 is secured to the first end of cylinder wall 344. The hydraulic piston 343 is nested within the hollow structure of cylinder wall 344. The space 354 surrounded by the second end of hydraulic piston 343, internal wall of cylinder wall 344 and internal wall of inner wall 346 is filled with brake fluid, which travels through hydraulic line 356 to braking mechanism 22. The hydraulic piston 343 of Fig. 16 may be removed from the cylinder wall 344 to provide access to space 354 wherein brake fluid may be added. After addition of brake fluid to space 354, the hydraulic piston may be replaced to its original position, thereby acting as a plunger and conveniently bleed the braking mechanism 22 to remove air.

The steering and braking control system of Fig. 11 utilizes a conventional steering wheel 26 in the steering operation and a steering shaft 14' incorporating the master brake cylinder 340 to directly control the braking mechanism 22 of the vehicle. When downward force is exerted on steering wheel 26, both cylinder wall 344 and hydraulic piston 343 also move downward, axially within the steering shaft 14', aided by vacuum assist 353 through control line 352 within space 345, and guided by bearings 350a, 350b, 350c, 350d, 350e and 350f. Downward movement of the hydraulic piston 343 displaces brake fluid within space 354 to the braking mechanism 22 through hydraulic line 356, thereby causing the motion of the vehicle to arrest.

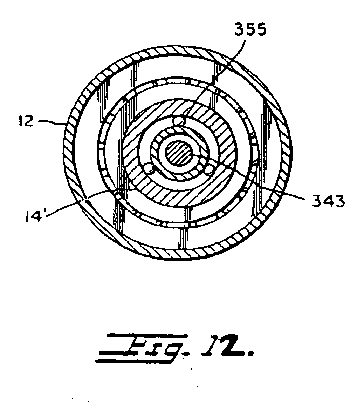

Fig. 12 illustrates the nesting arrangement of steering shaft 14', cylinder wall 344 and hydraulic piston 343, showing axial groves 355 on the internal wall of steering shaft 14' and external wall of cylinder wall 344, where bearing 350c and 350d slide.

It should now be appreciated that the practice of the present invention provides for various embodiments of the steering and control system 10' each of which allows the driver of a vehicle, which also includes race cars as well as golf carts, to not only control the steering of the vehicle, but in addition, thereto, allows the operator to merely press on the steering wheel to control the braking operations of the vehicle.

While the invention has been described in complete detail and pictorially shown in the accompanying drawings, it is not to be limited to such details, since many changes and modifications may be made to the invention without departing from the scope thereof. Hence, it is described to cover any and all modifications and forms which may come within the language and scope of the claims.

For example, the terminolocy "steering wheel" was used in the examples and embodiments shown in Figures 1-12 to designate a conventional steering wheel by which means the operator controls the steering of the car, since that is the term most commonly used. However, steering control means could take other shapes, such as arcs, rods, and other structural shapes.

## Claims

1. A steering and braking control system for a vehicle with a steering column having a longitudinally extending axis defined by a steering shaft (14'), said vehicle having a braking mechanism (22) and a vacuum assist (353), said control system comprising:
(a) a steering member (26) having first (341) and second (342) arms, with said first arm having first and second ends and said second arm having first and second ends; and
(b) a master brake cylinder (340) nested within said steering shaft (14).

2. The steering and braking control system according to claim 1, wherein said master brake cylinder further comprises:
(a) a hydraulic piston (343) having first and second ends; and
(b) a cylinder wall (344) having a bore dimensioned to allow the passage of said hydraulic piston, said cylinder wall having an external and internal wall (346), said cylinder wall having first and second ends, said first end having means for connecting to said second ends of said first and second arms (341,342) of said steering member (26), and said first end also having means for connecting to said first end of said hydraulic piston.

3. The steering and braking control system according to claim 1 or 2, wherein said steering shaft (14') has a well dimensioned to allow the passage of said master brake cylinder (340), said well having an internal wall, said steering shaft having first and second ends, said second end having means for connecting to said braking mechanism (22).

4. The steering and braking control system according to any preceding claim, wherein said steering shaft (14') has an inner wall with a dimension of said internal wall (346) of said cylinder wall (344).

5. The steering and braking control system according to any preceding claim, wherein said master brake cylinder (340) has bearing means (350a..f) and has at least one groove (355) along said external wall of said master brake cylinder so that said master brake cylinder is axially movable relative to said steering shaft (14') but restricted from radial movement relative to said steering shaft.

6. The steering and braking control system according to any of claims 3 to 5, wherein said master brake cylinder (340) is arranged so that said second end is nested between said second end of said steering shaft (14') and said inner wall of said steering shaft and when said master brake cylinder is moved axially downward within said well of said steering shaft, a space (346) between said second end of said hydraulic piston, said internal wall (346) of said cylinder wall (344) and said second end of said steering shaft decreases thereby displacing fluid to said braking mechanism (22).

7. The steering and braking control system according to any of claims 3 to 6, wherein said master brake cylinder (340) is arranged so that a space (345) between said second end of said cylinder wall (344), said inner wall of said steering shaft (14') and said second end of said steering shaft has means for connecting to said vacuum assist (353).

8. The steering and braking control system according to any of claims 3 to 7, wherein said master brake cylinder (340) has means (348,351) for sealing the connection between said second end of said cylinder wall (344) and said inner wall of said steering shaft (14') and said second end of said steering shaft.

## Patentansprüche

1. Lenk- und Bremssteuersystem für ein Fahrzeug mit einer Lenksäule mit einer sich in Längsrichtung erstreckenden Achse, die durch eine Lenkwelle (14') definiert ist, wobei das Fahrzeug einen Bremsmechanismus (22) und einen Vakuumassistenten (353) aufweist, und wobei das Steuersystem aufweist:
(a) ein Lenkelement (26) mit einem ersten (341) und einem zweiten (342) Arm, wobei der erste Arm ein erstes und ein zweites Ende aufweist und der zweite Arm ein erstes und ein zweites Ende aufweist; und
(b) einen Hauptbremszylinder (340), der in der Lenkwelle (14') verschachtelt ist.

2. Lenk- und Bremssteuersystem nach Anspruch 1, wobei der Hauptbremszylinder außerdem aufweist:
(a) einen hydraulischen Kolben (343) mit einem ersten und einem zweiten Ende; und
(b) eine Zylinderwand (344) mit einem Loch, das derart dimensioniert ist, dass es den Durchtritt des hydraulischen Kolbens ermöglicht, wobei die Zylinderwand eine äußere und eine innere Wand (346) sowie ein erstes und ein zweites Ende aufweist, wobei das erste Ende Mittel zur Verbindung mit dem zweiten Ende des ersten und zweiten Arms (341, 342) des Lenkelements (26) aufweist, und wobei das erste Ende außerdem Mittel zur Verbindung mit dem ersten Ende des hydraulischen Kolbens aufweist.

3. Lenk- und Bremssteuersystem nach Anspruch 1 oder 2, wobei die Lenkwelle (14') einen Schacht aufweist, der derart dimensioniert ist, dass er den Durchtritt des Hauptbremszylinders (340) ermöglicht, wobei der Schacht eine innere Wand aufweist, und wobei die Lenkwelle ein erstes und ein zweites Ende aufweist und das zweite Ende Mittel zur Verbindung mit dem Bremsmechanismus (22) aufweist.

4. Lenk- und Bremssteuersystem nach einem der vorangehenden Ansprüche, wobei die Lenkwelle (14') eine innere Wand mit einer Abmessung wie die innere Wand (346) der Zylinderwand (344) aufweist.

5. Lenk- und Bremssteuersystem nach einem der vorangehenden Ansprüche, wobei der Hauptbremszylinder (340) Lagermittel (350a...f) und wenigstens eine Rille (355) entlang der äußeren Wand des Hauptbremszylinders aufweist, sodass der Hauptbremszylinder in axialer Richtung relativ zur Lenkwelle (14') beweglich ist, allerdings keine radiale Bewegung relativ zur Lenkwelle ausführen kann.

6. Lenk- und Bremssteuersystem nach einem der Ansprüche 3 bis 5, wobei der Hauptbremszylinder (340) derart angeordnet ist, dass das zweite Ende zwischen dem zweiten Ende der Lenkwelle (14') und der inneren Wand der Lenkwelle verschachtelt ist, und wobei ein Zwischenraum (346) zwischen dem zweiten Ende des hydraulischen Kolbens, der inneren Wand (346) der Zylinderwand (344) und dem zweiten Ende der Lenkwelle kleiner wird, wenn der Hauptbremszylinder innerhalb des Schachtes der Lenkwelle in axialer Richtung nach unten bewegt wird, wodurch Flüssigkeit zum Bremsmechanismus (22) verlagert wird.

7. Lenk- und Bremssteuersystem nach einem der Ansprüche 3 bis 6, wobei der Hauptbremszylinder (340) derart angeordnet ist, dass ein Zwischenraum (345) zwischen dem zweiten Ende der Zylinderwand (344), der inneren Wand der Lenkwelle (14') und dem zweiten Ende der Lenkwelle Mittel zur Verbindung mit dem Vakuumassistenten (353) aufweist.

8. Lenk- und Bremssteuersystem nach einem der Ansprüche 3 bis 7, wobei der Hauptbremszylinder (340) Mittel (348, 351) zum Abdichten der Verbindung zwischen dem zweiten Ende der Zylinderwand, der inneren Wand der Lenkwelle (14') und dem zweiten Ende der Lenkwelle aufweist.

## Revendications

1. Système de commande de direction et de freinage pour un véhicule avec une colonne de direction possédant un axe longitudinal défini par un arbre de direction (14'), ce véhicule possédant un mécanisme de freinage (22) et un auxiliaire à dépression (353), ce système de commande comprenant:
(a) un organe de direction (26) possédant un premier (341) et un second (342) bras, le premier bras présentant une première et une seconde extrémités, et le second bras présentant une première et une seconde extrémités, et
(b) un maître-cylindre de frein (340), logé dans l'arbre de direction (14').

2. Système de commande de direction et de freinage selon la revendication 1, dans lequel le maître-cylindre de frein comprend en outre:
(a) un piston hydraulique (343) présentant une première et une seconde extrémités, et
(b) une paroi cylindrique (344) présentant un alésage dimensionné pour permettre le passage du piston hydraulique, la paroi cylindrique possédant une paroi externe et interne (346), la paroi cylindrique présentant une première et une seconde extrémités, la première extrémité possédant des moyens de connexion aux secondes extrémités du premier et du second bras (341, 342) de l'organe de direction (26), et la première extrémité possédant également des moyens de connexion à la première extrémité du piston hydraulique.

3. Système de commande de direction et de freinage selon la revendication 1 ou 2, dans lequel l'arbre de direction (14') possède un logement dimensionné pour permettre le passage du maître-cylindre de frein (340), le logement présentant une paroi interne, l'arbre de direction possédant une première et une seconde extrémités, la seconde extrémité possédant des moyens de connexion au mécanisme de freinage (22).

4. Système de commande de direction et de freinage selon l'une quelconque des revendications précédentes, dans lequel l'arbre de direction (14') possède une paroi interne de la dimension de la paroi interne (346) de la paroi cylindrique (344).

5. Système de commande de direction et de freinage selon l'une quelconque des revendications précédentes, dans lequel le maître-cylindre de frein (340) présente des moyens d'appui (350a ... f) et présente au moins une rainure (355) le long de la paroi externe du maître-cylindre de frein de telle sorte que le maître-cylindre de frein est mobile axialement par rapport à l'arbre de direction (14'), mais limité en mouvement radial par rapport à l'arbre de direction.

6. Système de commande de direction et de freinage selon l'une quelconque des revendications 3 à 5, dans lequel le maître-cylindre de frein (340) est agencé de telle sorte que la seconde extrémité est logée entre la seconde extrémité de l'arbre de direction (14') et la paroi interne de l'arbre de direction et, lorsque le maître-cylindre de frein est déplacé axialement vers le bas à l'intérieur du logement de l'arbre de direction, un espace (346) entre la seconde extrémité du piston hydraulique, la paroi interne (346) de la paroi cylindrique (344) et la seconde extrémité de l'arbre de direction diminue, déplaçant ainsi du fluide vers le mécanisme de freinage.

7. Système de commande de direction et de freinage selon l'une quelconque des revendications 3 à 6, dans lequel le maître-cylindre de frein (340) est agencé de telle sorte qu'un espace (345) entre la seconde extrémité de la paroi cylindrique (344), la paroi interne de l'arbre de direction (14') et la seconde extrémité de l'arbre de direction présente des moyen de liaison à l'auxiliaire à dépression (353).

8. Système de commande de direction et de freinage selon l'une quelconque des revendications 3 à 7, dans lequel le maître-cylindre de frein (340) présente des moyens (348, 351) pour couper la liaison entre la seconde extrémité de la paroi cylindrique (344) et la paroi interne de l'arbre de direction (14'), et la seconde extrémité de l'arbre de direction.
